# FASCICULE DE BREVET EUROPEEN

(11) **EP 2 655 149 B1**
(45) Date de publication et mention de la délivrance du brevet: **22.04.2015**
(21) Numéro de dépôt: 11794095.7
(22) Date de dépôt: 05.12.2011
(51) Int. Cl.: B60T 11/232, B60T 11/236

(54) **PISTON SECONDAIRE DE MAÎTRE-CYLINDRE TANDEM ET MAÎTRE-CYLINDRE EQUIPE D'UN TEL PISTON SECONDAIRE**
ZWEITER HAUPTBREMSZYLINDERKOLBEN UND HAUPTBREMSZYLINDER MIT SO EINEM KOLBEN
SECONDARY MASTER CYLINDER PISTON AND MASTER CYLINDER WITH SUCH A PISTON

(30) Priorité: 21.12.2010 FR 1005008
(43) Date de publication de la demande: 30.10.2013
(73) Titulaire: Robert Bosch GmbH, 70442 Stuttgart (DE)
(72) Inventeur: CHARPENTIER, Carole, F-95160 Montmorency (FR); AUGUSTE, Antony, F-94350 Villier Sur Marne (FR); LHUILLIER, Laurent, F-93150 Le Blanc Mesnil (FR); BERNADAT, Olivier, F-94170 Le Perreux (FR); RODRIGUEZ, Marc, F-95280 Jouy le Moutier (FR)
(86) Numéro de dépôt international: PCT/EP2011/071724
(87) Numéro de publication internationale: WO 2012/084468

(56) Documents cités:
- EP-A1- 2 199 164
- DE-A1-102006 000 341
- FR-A1- 2 820 701
- US-A1- 2005 044 852

## Description

### Domaine de l'invention

La présente invention se rapporte à un piston secondaire de maître-cylindre tandem comprenant:
- une jupe cylindrique ayant une extrémité avant libre et un fond pour son actionnement sur une face par la tige poussoir du piston primaire et sur l'autre face par le ressort de rappel,
- le piston délimitant une chambre de pression dans le maître-cylindre,
- le bord avant du piston en position de repos coopérant avec un joint logé dans une gorge du corps du maître-cylindre et séparant la chambre d'alimentation de la chambre de pression en laissant passer le fluide hydraulique à travers des passages de la jupe lorsque le système de freinage est en mode ESP, contrôle automatique de trajectoire.

L'invention concerne également un maître-cylindre tandem équipé d'un piston secondaire tel que défini ci-dessus.

### Etat de la technique

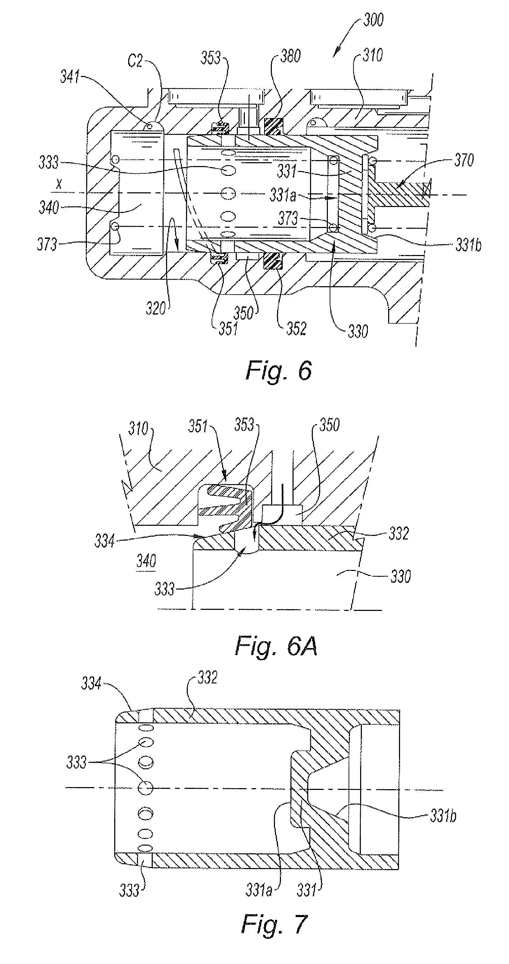

Les figures 6 et 7 montrent un maître-cylindre tandem selon l'état de la technique. Ce maître-cylindre 300 représenté seulement pour la partie au niveau du cylindre secondaire 330 se compose d'un corps 310 avec un alésage 320 dans lequel est logé un piston secondaire 330 et le cas échéant un piston primaire, non représenté, si le maître-cylindre 300 est un maître-cylindre tandem. L'actionnement du maître-cylindre se fait dans la direction de la flèche AF. Dans l'alésage 320, le piston secondaire 330 délimite une chambre de pression 340 reliée au circuit de freins secondaire. La chambre de pression 340 est alimentée à partir de la chambre d'alimentation 350 en liquide de frein. La chambre de pression 340 est séparée de la chambre d'alimentation 350 par un joint de réalimentation 353 placé dans une gorge 351 du corps 310. De l'autre côté de la chambre d'alimentation 350 l'étanchéité vers l'extérieur est réalisée par un joint d'isolation 380 logé dans une gorge 352 du corps 310 et s'appuyant contre le piston secondaire 330. Le piston secondaire 330 se compose d'un fond 331 dont la face arrière 331b reçoit le poussoir du servofrein et la face 331b reçoit la tige télescopique 370 formée de deux parties et maintenues écartées par un ressort 373. Cette tige 370 est reliée au piston primaire.

Le piston secondaire 330 est une pièce en aluminium, usinée, ayant une jupe cylindrique 332 munie d'un fond 331 dont une face 331b est munie d'un logement tronconique pour recevoir l'extrémité du poussoir 370 reliée au piston primaire 132 et dont l'autre face 331a sert d'appui au ressort de rappel 373. Le bord avant de la jupe 332 a une surface de forme tronconique 334 traversée par une couronne de trous 333. Le piston secondaire 330 délimite la chambre de pression secondaire 340 du circuit secondaire C2 dans le maître-cylindre et coopère avec un joint de réalimentation 353 logé dans une gorge 351 usinée dans l'alésage 320. Cette gorge 351 est située au-delà de la chambre d'alimentation 350 reliée à la conduite d'alimentation en liquide hydraulique; le joint 353 coopérant avec la surface extérieure du piston secondaire 330, assure ainsi l'étanchéité entre la chambre d'alimentation 350 et la chambre de pression 340. Toutefois, lorsque le piston secondaire 330 est en position de repos, son bord avant est situé juste en amont de la chambre d'alimentation 350 de sorte que du liquide de frein peut passer sous le joint à travers les trous 333 de l'avant de la jupe 332 du piston secondaire 330 et arriver dans la chambre de pression 340.

De tel piston et maître-cylindre sont décrits dans le document DE 10 2006 000341A1.

La figure 7 est une vue en coupe axiale du piston secondaire 330, connu, montrant la forme de sa jupe 332 avec sa partie avant tronconique 334 et la couronne de trous 333 ainsi que la forme du fond 331 avec sa face 331a avec un bossage pour le centrage du ressort 373 (figure 6) et son autre face 331b avec un logement tronconique pour recevoir la tige télescopique 370 reliée au piston principal.

La figure 6A qui est une vue en coupe très schématique, montre la position de repos du joint de réalimentation 353 dans sa gorge 351 du corps 310 du maître-cylindre ainsi que la chambre d'alimentation 350 et la jupe 332 du piston secondaire 330 avec la couronne de trous représentée ici par un seul trou 333 placé sous le joint 353. Une flèche indique le passage du liquide hydraulique en phase de réalimentation, entré la chambre d'alimentation 350, le trou 333, l'intérieur du piston secondaire 330 et devant de celui-ci, la chambre de pression 340. Cette figure souligne la nécessité de la forme conique car le débit en position de repos pour le mode de fonctionnement ESP du système de freins, est fonction de la section des trous ainsi que de l'espace entre le piston et le corps 310 du maître-cylindre.

Ce piston secondaire 330 a un certain nombre d'inconvénients, tant de fabrication que d'utilisation:

La fabrication est relativement coûteuse à cause de la couronne de trous 333 à percer dans le bord avant de la jupe 332 et d'autre part à cause de la forme tronconique 334 qu'il faut donner au bord de la jupe. De plus, les perçages 333 réalisés dans le bord de la jupe, ont souvent des bavures usant prématurément le joint 353 coopérant avec le piston secondaire 330.

### But de l'invention

La présente invention a pour but de développer un piston secondaire de maître-cylindre et un maître-cylindre ainsi équipé, évitant les problèmes d'usure du joint d'étanchéité, facilitant la réalisation du piston et réduisant son coût de fabrication et garantissant les performances en débit pour le mode ESP.

### Exposé et avantages de l'invention

A cet effet, l'invention a pour but un piston secondaire de maître-cylindre du type défini ci-dessus, caractérisé en ce que, le bord avant de la jupe a un profil crénelé formé d'encoches radiales ouvertes à l'avant pour coopérer avec la chambre d'alimentation de maître-cylindre.

Le piston secondaire selon l'invention offre l'avantage d'une fabrication simplifiée puisque les trous et la partie avant tronconique du piston connu sont remplacés par de simples encoches. La surface enveloppe du piston est ainsi cylindrique sur toute sa longueur. La forme des encoches a également l'avantage de simplifier la réalimentation de la chambre de pression d'une manière plus efficace qu'à travers les trous en garantissant le débit par le mode ESP.

Selon une autre caractéristique avantageuse, les encoches sont radiales et parallèles à l'axe xx du piston.

Le piston secondaire selon l'invention se réalise avantageusement en matière plastique par injection de moulage et notamment la jupe et le fond, se réalisent en une seule pièce.

Suivant une autre caractéristique avantageuse, les encoches radiales ont un fond droit et des côtés définis par des plans dirigés radialement. Le fond ou extrémité arrière, fermée des encoches est de préférence droite, dirigée transversalement et notamment constituée par une surface plane. Cette surface peut être inclinée par rapport l'axe du piston ou être perpendiculaire à celui-ci.

La forme des encoches radiales permet une réalisation très simple du moule d'injection et facilite le démoulage.

Suivant une autre caractéristique avantageuse, les encoches radiales sont parallèles à l'axe du piston secondaire.

Suivant une autre caractéristique avantageuse, les encoches radiales ont une forme hélicoïdale ce qui signifie qu'en chaque point, les parois de l'encoche sont dirigées radialement mais le tracé d'ensemble est hélicoïdal. Cette forme hélicoïdale favorise le contact avec le joint de réalimentation en évitant que celui-ci ne soit en permanence en contact soit avec le creux des encoches ou avec la surface pleine entre les encoches.

Le fond de l'encoche est de préférence droit, c'est-à-dire dans un plan perpendiculaire à l'axe du piston secondaire.

L'invention concerne également un maître-cylindre tandem équipé d'un piston secondaire ayant:
- une jupe cylindrique ayant une extrémité avant libre et un fond pour son actionnement sur une face par la tige poussoir du piston primaire et sur l'autre face par le ressort de rappel,
- le piston délimitant une chambre de pression dans le maître-cylindre,
- le bord avant du piston en position de repos coopérant avec un joint logé dans une gorge du corps du maître-cylindre et séparant la chambre d'alimentation de la chambre de pression en laissant passer le fluide hydraulique à travers des passages de la jupe lorsque le système de freinage est en mode ESP,
- le bord de la jupe a un profil crénelé formé d'encoches radiales ouvertes à l'avant,
ce piston secondaire étant réalisé par moulage/injection en matière plastique.

### Dessins

La présente invention sera décrite ci-après de manière plus détaillée à l'aide d'un mode de réalisation représenté schématiquement dans les dessins annexés dans lesquels:
- la figure 1 est une vue en coupe schématique d'un maître-cylindre tandem équipé d'un piston secondaire selon l'invention,
- la figure 2 est une vue de côté d'un piston secondaire selon l'invention,
- la figure 3 est une vue en coupe axiale du piston secondaire de la figure 2,
- la figure 4 est une vue en perspective partielle de la jupe piston secondaire,
- la figure 5 est une vue développée d'une encoche du piston secondaire,
- la figure 6 est une vue en coupe partielle d'un maître-cylindre connu avec son piston secondaire,
- la figure 6A est une vue de détail montrant la coopération du bord avant de la jupe du piston secondaire avec le joint de réalimentation logé dans la gorge de l'étrier, selon l'état de la technique,
- la figure 7 est une vue en coupe du piston secondaire connu.

### Description d'un mode de réalisation de l'invention

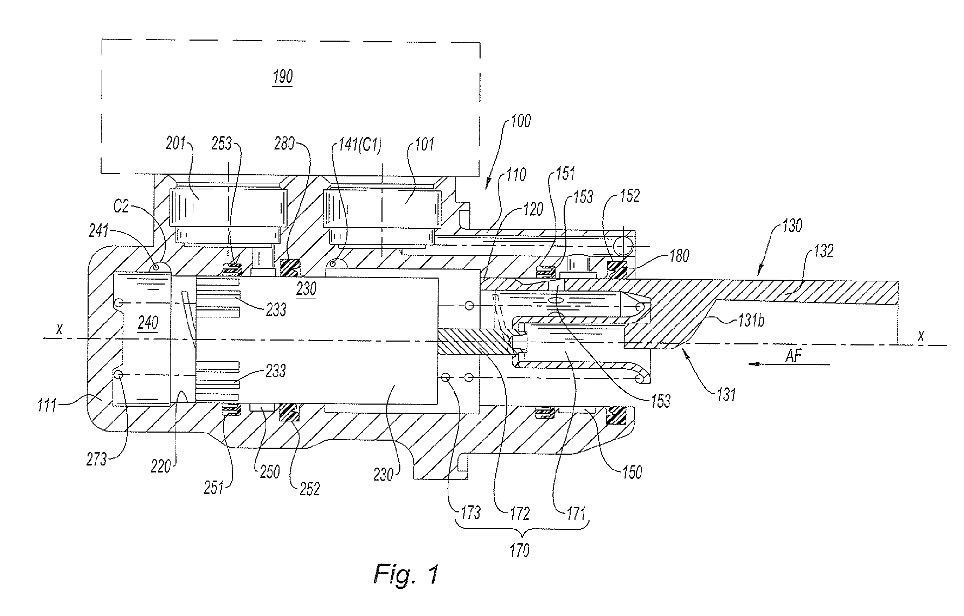

La figure 1 montre un maître-cylindre tandem 100 selon l'invention, décrit ci-après pour sa partie secondaire, sachant que cette description s'applique pratiquement à sa partie primaire pour tous les éléments qui constituent le dédoublement et permettent la commande de deux circuits de freins indépendants C1, C2.

Le maître-cylindre 100 se compose d'un corps 110 traversé par un alésage 120 d'axe (xx) recevant le piston primaire 130.

Le piston primaire 130 et l'alésage 220 logeant le piston secondaire 230.

Le sens de déplacement des pistons 130, 230 est indiqué par la flèche AF qui correspond à une action de freinage.

Le dessus du maître-cylindre est muni de deux entrées 101, 201 pour les embouts de sortie du réservoir de liquide de frein 190 simplement esquissé.

Le piston secondaire 230 délimite dans l'alésage 220 une chambre de pression 240 reliée au circuit de freins C2 par un perçage 241 débouchant dans la chambre 240. Cette chambre de pression 240 est séparée par le piston 230 creux, d'une chambre d'alimentation 250 réalisée dans le corps 110 du maître-cylindre 100 et entre son alésage 220 et la surface extérieure du piston 230, elle est matérialisée par une gorge périphérique dans l'alésage. Des deux côtés, la chambre d'alimentation 250 est bordée par une gorge périphérique 251, 252 débouchant dans l'alésage. La gorge avant 251 reçoit un joint périphérique de réalimentation 253 et la gorge arrière 252, un joint périphérique d'étanchéité 280 encore appelé joint d'isolation.

Le joint de réalimentation 253 permet l'alimentation en liquide de frein de la chambre de pression 240 en cas de manque de liquide de frein ou d'un actionnement brusque des freins. Le mouvement d'ouverture et de fermeture de ce joint de réalimentation 253 est décrit dans le document FR 2 916 405. Le joint d'étanchéité 280 qui sépare la chambre d'alimentation 250 l'autre chambre de pression 140 a pour fonction d'assurer l'étanchéité entre l'alésage 220 et la surface du piston 230.

Les deux pistons 130, 230 sont reliés par une tige télescopique 170 formée de deux parties 171, 172 maintenues écartées par un ressort 173 et s'appliquant par les deux extrémités, l'une contre le fond 131 du piston primaire 130 et l'autre contre le fond 231 du piston secondaire 230.

La description de la partie secondaire du maître-cylindre 100, donnée ci-dessus se transpose à sa partie primaire; il y a un dédoublement des moyens de mise en pression des deux circuits de freins C1, C2. La description donnée ci-dessus s'applique dans les mêmes conditions aux éléments concernés par l'invention et qui portent les mêmes références diminuées de 100.

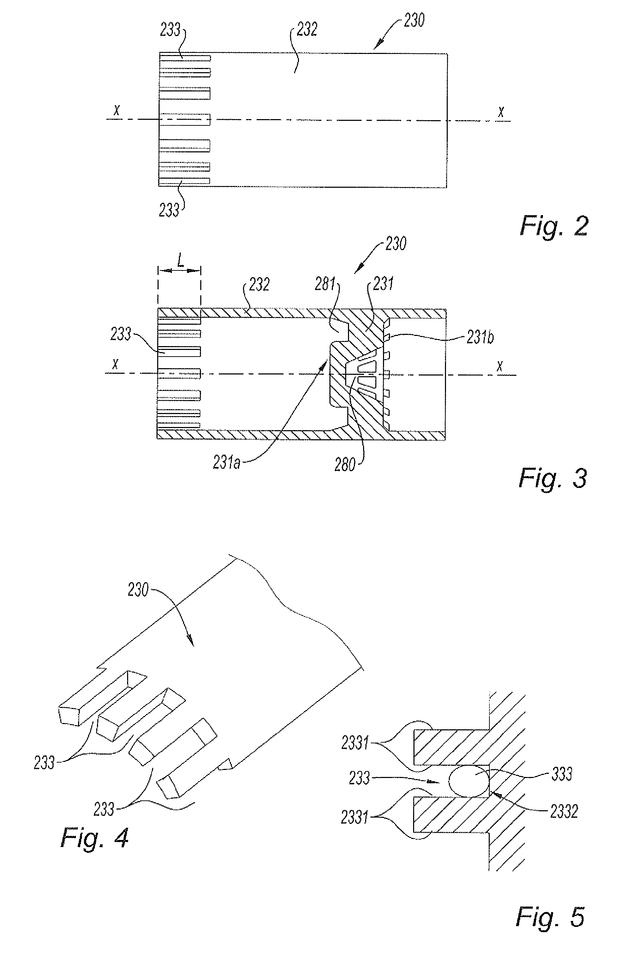

Selon les figures 2 et 3, un piston secondaire 230 est composé d'une jupe cylindrique 232 munie d'un fond 231 dont la face arrière 231b tournée vers le piston primaire comporte un logement tronconique 280 recevant l'extrémité du poussoir 170 relié au piston primaire 130 et dont l'autre face 231a est munie d'une gorge 281 pour recevoir le ressort hélicoïdal de rappel 273 du piston. Ce ressort 273 s'appuie contre le fond 111 de l'alésage 220 du maître-cylindre.

Le bord avant de la jupe 232 c'est-à-dire le bord non tourné vers le piston principal est crénelé sur une certaine longueur axiale L, avec des encoches 233 de section rectangulaire, alignées suivant l'axe xx. Ces encoches 233 radiales sont ouvertes vers le bord avant de la jupe; elles ont une forme rectangulaire. Les bords 2331 de l'encoche 233 sont délimités par des plans radiaux et l'arrière 2332 est droit. Le bord arrière est droit, c'est-à-dire transversal et dans cet exemple tous les bords arrière sont situés sur un même cercle. Le bord arrière peut être constitué par une surface plane, inclinée par rapport à l'axe xx ou perpendiculaire à cet axe.

La forme du bord avant crénelé apparaît plus clairement dans la figure 3 représentée en perspective.

La face arrière est constituée de nervures qui ont deux fonctions :
- l'augmentation de la rigidité du piston secondaire. La définition précise relève de calculs de structures,
- faciliter le remplissage en plastique du piston lors de l'injection.

Suivant un mode de réalisation non représenté, les encoches 233 sont de forme hélicoïdale.

La figure 5 montre à titre de comparaison, la forme développée d'une encoche 233 du cylindre secondaire des figures 3 à 5 et d'un trou 333 du piston secondaire connu 330.

La superposition des deux formes de réalisation des passages, montre que l'encoche 233 qui tient lieu de passage pour le liquide hydraulique dans le piston selon l'invention, a une différence de section aux abords du trou et que cette différence de section ne nécessite pas de cône pour le passage du débit en mode ESP comme cela est représenté aux figures 6 et 7. Cette image superposée montre le bord arrière 2331, de l'encoche 233 et le contour du trou 333 qui est en faveur de la section de passage de l'encoche 233 du piston secondaire selon l'invention et assure la compensation du contour arrondi du trou 233 et de la forme tronconique de l'état de la technique pour le débit de liquide en mode ESP.

Le piston secondaire selon l'invention, est réalisé par moulage/injection en matière plastique de sorte que les arêtes des dents ou des encoches du bord avant, ont un congé de moulage et non des arêtes vives sans nécessiter d'usinage particulier.

Le piston secondaire selon l'invention avec des encoches radiales droites, se réalise sans nécessiter de moule particulier pour permettre le démoulage. Celui-ci se fait dans la direction de l'axe xx du piston secondaire.

Dans le cas d'encoches de forme non rectiligne mais hélicoïdale, le démoulage peut nécessiter un mouvement de rotation relative entre la pièce et le moule.

Le piston secondaire selon l'invention se réalise de préférence en une matière plastique choisie dans le groupe comprenant:

La Bakélite parmi les matières thermodures et le polypropylène parmi les matières thermoplastiques.

L'assemblage du maître-cylindre tandem équipé d'un piston secondaire selon l'invention se fait sans difficultés particulières et sans avoir à modifier les chaînes d'assemblage. La forme simplifiée du piston secondaire simplifie le procédé de fabrication qui devient moins cher.

A l'usage, le maître-cylindre fonctionne avec de bonnes performances de débit, notamment pour travailler en mode ESP.

Enfin, la suppression de l'usinage et donc des bavures d'usinage, simplifie d'autant la fabrication et la rend moins coûteuse.

Le nombre d'encoches et leur répartition de préférence régulière à la périphérie du bord avant du piston secondaire 230 se définissent par des études hydrauliques et des essais. La longueur (L) des encoches 233 est définie en fonction de la géométrie du maître-cylindre tandem, pour avoir la position de repos du piston secondaire par rapport au joint de réalimentation 253 et permettre cette réalimentation et le fonctionnement en mode ESP.

### NOMENCLATURE DES ELEMENTS PRINCIPAUX

- 100: maître-cylindre tandem selon l'invention
- 101, 201: entrées
- 110: corps
- 111: fond de la chambre de pression secondaire
- 120: alésage
- 130: piston primaire
- 131: fond du piston
- 133: trou
- 134: forme tronconique
- 140, 240: chambre de pression primaire/secondaire
- 141, 241: perçage
- 150, 250: chambre d'alimentation
- 153, 253: joint de réalimentation
- 170: tige télescopique
- 171, 172: parties de la tige
- 173: ressort
- 180, 280: joint d'étanchéité
- 190: réservoir
- 230: piston secondaire
- 231: fond du piston
231a face avant
231b face arrière
- 232: jupe
- 233: encoche
2331 côté de l'encoche 233
2332 fond de l'encoche
- 273: ressort
- 281: gorge
- 300: maître-cylindre tandem connu
- 320: alésage
- 310: corps du maître-cylindre
- 330: fond du piston secondaire
331a face avant
331b face arrière
- 340: chambre de pression secondaire
- 341: perçage
- 350: chambre d'alimentation
- 351: gorge annulaire
- 352: joint d'isolation
- 353: joint de réalimentation
- 370: tige télescopique
- 373: ressort
- 380: joint d'isolation
- C1, C2: circuits de freins

## Revendications

1. Piston secondaire de maître-cylindre tandem comprenant:
- une jupe cylindrique ayant une extrémité avant libre et un fond pour son actionnement sur une face par la tige poussoir du piston primaire et sur l'autre face par le ressort de rappel,
- le piston délimitant une chambre de pression dans le maître-cylindre,
- le bord avant du piston en position de repos coopérant avec un joint logé dans une gorge du corps du maître-cylindre et séparant la chambre d'alimentation de la chambre de pression en laissant passer le fluide hydraulique à travers des passages de la jupe lorsque le système de freinage est en mode ESP ou pour la réalimentation,
piston secondaire (230) **caractérisé en ce que**
le bord de la jupe (232) a un profil crénelé formé d'encoches (233) ouvertes à l'avant.

2. Piston secondaire de maître-cylindre tandem selon la revendication 1,
**caractérisé en ce que**
les encoches sont radiales et parallèles à l'axe (xx) du piston (230).

3. Piston secondaire de maître-cylindre tandem selon la revendication 2,
**caractérisé en ce que**
les encoches radiales (233) ont un fond droit (2332) et des côtés (2331) définis par des plans dirigés radialement.

4. Piston secondaire de maître-cylindre tandem selon la revendication 1,
**caractérisé en ce que**
les encoches sont hélicoïdales.

5. Piston secondaire de maître-cylindre tandem selon la revendication 1,
**caractérisé en ce qu'**
il est réalisé par moulage-injection en matière plastique.

6. Maître-cylindre tandem,
**caractérisé en ce qu'**
il comprend un piston secondaire (130) ayant:
- une jupe cylindrique (232) avec une extrémité avant libre et un fond (231) pour son actionnement sur une face (231b) par la tige poussoir du piston primaire (130) et sur l'autre face (231a) par le ressort de rappel (273),
- le piston (230) délimitant une chambre de pression (240) dans le maître-cylindre (100),
- le bord avant du piston en position de repos coopérant avec un joint (253) logé dans une gorge (251) du corps (110) du maître-cylindre (100) et séparant la chambre d'alimentation (250) de la chambre de pression (240) en laissant passer le fluide hydraulique à travers les encoches (233) de la jupe lorsque le système de freinage est en mode ESP,
- le bord de la jupe a un profil crénelé formé d'encoches (233) radiales ouvertes à l'avant, et
- le piston secondaire est réalisé par moulage/injection en matière plastique.

## Patentansprüche

1. Sekundärkolben eines Tandemhauptbremszylinders, umfassend:
- einen zylindrischen Mantel, der ein freies vorderes Ende und einen Boden für seine Betätigung auf einer Seite durch die Stößelstange des Hauptkolbens und auf der anderen Seite durch die Rückstellfeder aufweist,
- wobei der Kolben eine Druckkammer in dem Hauptbremszylinder abgrenzt,
- wobei der vordere Rand des Kolbens in Ruhestellung mit einer Dichtung zusammenwirkt, die in einer Nut des Hauptbremszylindergehäuses angeordnet ist, und die Zufuhrkammer von der Druckkammer trennt, indem er die Hydraulikflüssigkeit durch die Durchgänge des Mantels durchlässt, wenn das Bremssystem im ESP-Modus ist oder für die Nachspeisung,
Sekundärkolben (230), **dadurch gekennzeichnet, dass**
der Rand des Mantels (232) ein gezahntes Profil aufweist, das aus Kerben (233) gebildet ist, die nach vorne geöffnet sind.

2. Sekundärkolben eines Tandemhauptbremszylinders nach Anspruch 1, **dadurch gekennzeichnet, dass**
die Kerben radial und parallel zu der Achse (xx) des Kolbens (230) sind.

3. Sekundärkolben eines Tandemhauptbremszylinders nach Anspruch 2, **dadurch gekennzeichnet, dass**
die radialen Kerben (233) einen geraden Boden (2332) und Seiten (2331) aufweisen, die durch Ebenen definiert sind, die radial gerichtet sind.

4. Sekundärkolben eines Tandemhauptbremszylinders nach Anspruch 1, **dadurch gekennzeichnet, dass**
die Kerben spiralförmig sind.

5. Sekundärkolben eines Tandemhauptbremszylinders nach Anspruch 1, **dadurch gekennzeichnet, dass**
er durch Spritzgießen aus Kunststoff erstellt ist.

6. Tandemhauptbremszylinder,
**dadurch gekennzeichnet, dass**
er einen Sekundärkolben (230) aufweist, umfassend:
- einen zylindrischen Mantel (232), der ein freies vorderes Ende und einen Boden (231) für seine Betätigung auf einer Seite (231b) durch die Stößelstange des Hauptkolbens (130) und auf der anderen Seite (231a) durch die Rückstellfeder (273) aufweist,
- wobei der Kolben (230) eine Druckkammer (240) in dem Hauptbremszylinder (100) abgrenzt,
- wobei der vordere Rand des Kolbens in Ruhestellung mit einer Dichtung (253) zusammenwirkt, die in einer Nut (251) des Gehäuses (110) des Hauptbremszylinders (100) angeordnet ist, und die Zufuhrkammer (250) von der Druckkammer (240) trennt, indem er die Hydraulikflüssigkeit durch die Kerben (233) des Mantels durchlässt, wenn das Bremssystem im ESP-Modus ist,
- wobei der Rand des Mantels ein gezahntes Profil aufweist, das aus radialen Kerben (233) gebildet ist, die nach vorne geöffnet sind, und
- der Sekundärkolben durch Gießen/Spritzen aus Kunststoff erstellt ist.

## Claims

1. Tandem master cylinder secondary piston comprising:
- a cylindrical skirt having a free front end and an end wall for its actuation on one face by the push rod of the primary piston and on the other face by the return spring,
- the piston delimiting a pressure chamber in the master cylinder,
- the front edge of the piston in the rest position co-operating with a seal housed in a groove of the body of the master cylinder and separating the supply chamber from the pressure chamber while allowing the hydraulic fluid to pass through passages of the skirt when the brake system is in ESP mode or for resupply,
which secondary piston (230) is **characterized in that** the edge of the skirt (232) has a crenulated profile formed by slots (233) which are open to the front.

2. Tandem master cylinder secondary piston according to Claim 1, **characterized in that** the slots are radial and parallel to the axis (XX) of the piston (230).

3. Tandem master cylinder secondary piston according to Claim 2, **characterized in that** the radial slots (233) have a straight end wall (2332) and sides (2331) defined by radially directed planes.

4. Tandem master cylinder secondary piston according to Claim 1, **characterized in that** the slots are helical.

5. Tandem master cylinder secondary piston according to Claim 1, **characterized in that** it is produced by injection-moulding a plastic material.

6. Tandem master cylinder, **characterized in that** it comprises a secondary piston (230) having:
- a cylindrical skirt (232) with a free front end and an end wall (231) for its actuation on one face (231b) by the push rod of the primary piston (130) and on the other face (231a) by the return spring (273),
- the piston (230) delimiting a pressure chamber (240) in the master cylinder (100),
- the front edge of the piston in the rest position co-operating with a seal (253) housed in a groove (251) of the body (110) of the master cylinder (100) and separating the supply chamber (250) from the pressure chamber (240) while allowing the hydraulic fluid to pass through the slots (233) of the skirt when the brake system is in ESP mode,
- the edge of the skirt has a crenulated profile formed by radial slots (233) which are open to the front, and
- the secondary piston is produced by injection-moulding a plastic material.
